# EUROPEAN PATENT APPLICATION

(11) **EP 1 443 771 A2**
(43) Date of publication of application: **04.08.2004**
(21) Application number: 04002315.2
(22) Date of filing: 03.02.2004
(51) Int. Cl.: H04N 7/26

(54) **Video encoding/decoding method and apparatus based on interlaced frame motion compensation**

(30) Priority: 03.02.2003 KR 2003006541
(71) Applicant: Samsung Electronics Co., Ltd., Suwon-si, Gyeonggi-cho (KR)
(72) Inventor: Song, Byung-cheol, 405-1104 Jugong Apt., Yeongtong-gu Suwon-si Gyenggi-do (KR); Chun, Kang-wook, Taean-eup Hwaseong-gun Gyeonggi-do (KR)
(74) Representative: Grünecker, Kinkeldey, Stockmair & Schwanhäusser Anwaltssozietät

(57) **Abstract**

Provided are a video encoding/decoding method, in which a motion between interlaced video frames is estimated and/or compensated, and a video encoding/decoding apparatus. In this method, first, a macroblock and a search range are received, and a frame motion vector for each integer pixel is estimated. Next, if the vertical component of the estimated frame motion vector is an odd value, the bottom field pixels in the received macroblock are matched with top field pixels in a reference frame that correspond to motion vectors obtained by scaling the vertical component of the original motion vectors depending on a field-to-field distance. If the vertical component of the original frame motion vector is an even value, the top or bottom field pixels in the received macroblock are matched with the top or bottom field pixels in the reference frame that correspond to the original frame motion vector.

## Description

The present invention relates to a system for encoding/decoding an interlaced video signal, and more particularly, to a video encoding/decoding method based on motion estimation and motion compensation of an interlaced video signal, and a video encoding/decoding apparatus.

Typical MPEG-2 transcoders adaptively use frame motion estimation and field motion estimation to encode an interlaced video. Also, the H.264 recommendation, which is under standardization at the present, considers the encoding of an interlaced moving image.

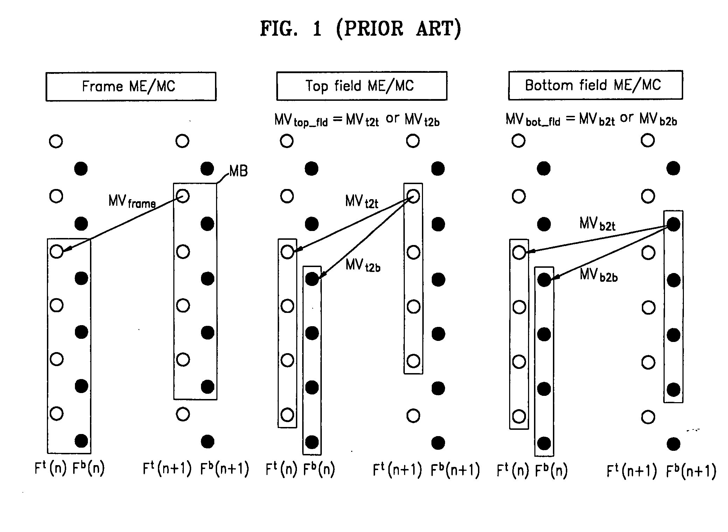

FIG. 1 is a conceptual diagram of conventional motion estimation and motion compensation using two frames in an interlaced video. F^{t}(n) and F^{b}(n) denote a top field and a bottom field, respectively, of an n-th frame. It is assumed that a current frame is an (n+1)th frame. For convenience, frames of the input video signal are shown on a time direction. In FIG. 1, a block to be motion-estimated, namely, a macroblock (MB), is composed of 8 vertically arranged pixels. A block to be motion-estimated of the current frame undergoes 5 motion estimations in a forward direction, namely, frame-to-frame motion estimation, top-to-top field motion estimation, top-to-bottom field motion estimation, bottom-to-top field motion estimation, and bottom-to-bottom field motion estimation. If a bi-directional motion estimation is required as in an MPEG-2 bi-directional picture, 5 forward motion estimations and 5 backward motion estimations are performed on the to be motion-estimated block of the current frame. Here, only forward motion estimation will be considered for the sake of convenience.

Referring to FIG. 1, in frame motion estimation (ME)/motion compensation (MC), an MB of a current frame F(n+1), indicated by a rectangular box, is matched with an MB of a reference frame F(n), indicated by a rectangular box, to find a frame motion vector MV_frame with a minimum Sum of Absolute Differences (SAD).

In top field ME/MC, a current top field F^{t}(n+1) is matched with a reference top field F^{t}(n) to find a motion vector MVₜ₂ₜ with a minimum SADₜ₂ₜ. Also, the current top field F^{t}(n+1) is matched with a reference bottom field F^{b}(n) to find a motion vector MV_{t2b} with a minimum SAD_{t2b}.

In bottom field ME/MC, a current bottom field F^{b}(n+1) is matched with the reference top field F^{t}(n) to find a motion vector MV_{b2t} with a minimum SAD_{b2t}. Also, the current bottom field F^{b}(n+1) is matched with the reference bottom field F^{b}(n) to find a motion vector MV_{b2b} with a minimum SAD_{b2b}.

A motion vector having SADₜ₂ₜ and a motion vector having SAD_{t2b} are compared, and a motion vector with a smaller SAD is determined to be a top field motion vector MV_{top_fld}. A motion vector having SAD_{b2t} and a motion vector having SAD_{b2b} are compared, and a motion vector having a smaller SAD is determined to be a bottom field motion vector MV_{bot_fld}. Hence, motion vectors to be used upon frame MC and field MC are all calculated by frame ME and field ME.

A SAD_{field} obtained from the top field motion vector MV_{top_fld} is compared with a SAD_{frame} obtained from the bottom field motion vector MV_{bot_fld}. If the SAD_{field} is smaller than the SAD_{frame}, field motion compensation occurs. If the SAD_{field} is greater than the SAD_{frame}, frame motion compensation occurs.

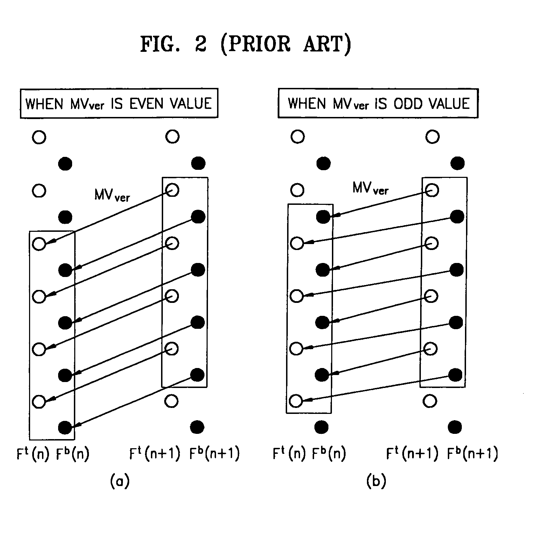

Such conventional frame ME/MC has the following problems. As shown in FIG. 2 (a), if the vertical component of a frame motion vector MV_{frame} (hereinafter, referred to as MVᵥₑᵣ is an even value, all of the pixels of a current macroblock have the same motion vector. Hence, frame motion compensation has no problems. However, if the MVᵥₑᵣ is an odd value as shown in FIG. 2 (b), frame motion compensation has a problem in that the motion vectors of the pixels corresponding to the top fields of the current macroblock are different from those of the pixels corresponding to the bottom fields of the current macroblock. Thus, in the conventional frame ME/MC, the probability that the MVᵥₑᵣ is determined to be an even value increases, and unnecessary field motion compensation occurs due to inaccurate motion estimation and compensation. Therefore, unnecessary motion vector information may increase.

It is the object of the present invention to provide a method of encoding/decoding an interlaced video signal, in which video motion estimation/compensation is performed in consideration of the actual locations of top field pixels and bottom field pixels that are received in an interlaced scanning way.

This object is solved by the subject matters of the independent claims.

Preferred embodiments are defined in the dependent claims.

According to an aspect of the present invention, there is provided a video encoding/decoding apparatus which performs the interlaced video encoding/decoding method according to the present invention.

According to a further aspect of the present invention, there is provided a video encoding/decoding method based on interlaced frame motion estimation and/or compensation. In the method, first, a macroblock and a search range are received, and a frame motion vector for each integer pixel is estimated using the received macroblock and search range. Then, if the vertical component of the estimated frame motion vector is an odd value, bottom field pixels in the received macroblock are matched with top field pixels in a reference frame that correspond to locations obtained by a scaled frame motion vector, whose vertical component has been scaled according to field-to-field distances. Also, top field pixels in the received macroblock are matched with bottom field pixels in the reference frame that correspond to the original frame motion vector. On the other hand, if the vertical component of the estimated frame motion vector is an even value, the top or bottom field pixels in the received macroblock are matched with the top or bottom field pixels in the reference frame that correspond to the original frame motion vector.

According to another aspect of the present invention, there is provided a method of encoding/decoding an interlaced video. In this method, first, a macroblock and a search range for image data are set. Then, it is determined whether the vertical component of a motion vector for each of integer pixels in the set macroblock is an even or odd value, and top and bottom field pixels in the macroblock are matched with field pixels in a reference frame that correspond to locations indicated by the motion vectors that are estimated different depending on the locations of pixels. Thereafter, if the motion vectors for the individual integer pixels of the macroblock have been completely estimated, the top/bottom field pixels in the macroblock are matched with half pixels in the reference frame that correspond to the motion vectors, wherein the matching is performed according to the vertical components of the motion vectors.

According to still another aspect of the present invention, there is provided an apparatus for encoding an interlaced video. This apparatus includes a discrete cosine transform unit, a quantization unit, a dequantization unit, an inverse discrete cosine transform unit, a frame memory, and a motion estimation/motion compensation unit. The discrete cosine transform unit performs a discrete cosine transform operation on individual macroblocks of incoming image data. The quantization unit quantizes the discrete cosine transformed image data. The dequantization unit dequantizes the quantized image data. The inverse discrete cosine transform unit performs inverse discrete cosine transform operation on the dequantized image data. The frame memory stores the inverse discrete cosine transformed image data on a frame-by-frame basis. The motion estimation/motion compensation unit determines whether the vertical component of a motion vector for each integer pixel in a macroblock is an even or odd value when the incoming image data of a current frame is compared with the image data of a previous frame stored in the frame memory. If the vertical component of the motion vector is an odd value, bottom field pixels are matched with top or bottom field pixels in the previous frame that correspond to motion vectors that are scaled depending on a distances between fields to be matched.

The above and other features and advantages of the present invention will become more apparent by describing in detail exemplary embodiments thereof with reference to the attached drawings in which:

FIGS. 1 and 2 are conceptual diagrams of conventional motion estimation and motion compensation using two frames in an interlaced video;

FIG. 3 is a block diagram of an interlaced video encoding apparatus according to the present invention;

FIG. 4 is a detailed flowchart for illustrating frame motion estimation (ME)/ motion compensation (MC) performed in the ME/MC unit of FIG. 3;

FIG. 5 is a detailed flowchart for illustrating frame ME when the vertical component of the motion vector of FIG. 4 is an odd value; and

FIG. 6 shows motion estimation and motion compensation using two frames in an interlaced video, according to an embodiment of the present invention.

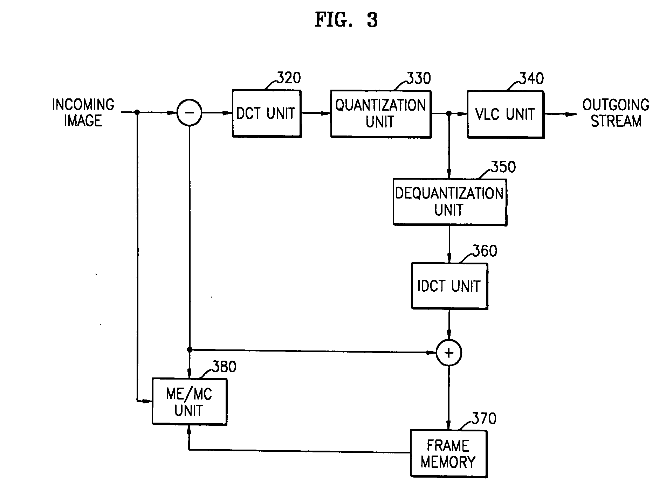

Referring to FIG. 3, in an interlaced video encoding system according to the present invention, an incoming image corresponds to a group of pictures (GOP). A discrete cosine transform (DCT) unit 320 performs DCT on 8x8 blocks to obtain spatial redundancy from the incoming image and outputs a discrete cosine transformed (DCTed) image.

A quantization (Q) unit 330 quantizes the DCTed image. A dequantization unit 350 dequantizes the quantized image.

An inverse DCT (IDCT) unit 360 performs IDCT on the dequantized image and outputs an inverse DCTed (IDCTed) image. Frame memory (FM) 370 stores the IDCTed image on a frame-by-frame basis.

A motion estimation (ME)/motion compensation (MC) unit 380 estimates a motion vector (NM for each macroblock and a Sum of Absolute Differences (SAD) by using image data of a current frame and image data of a previous frame stored in the frame memory 370, and performs motion compensation using the MVs.

A variable length coding (VLC) unit 340 removes statistical redundancy from the quantized image based on the MVs estimated by the ME/MC unit 380.

An interlaced video decoding apparatus restores a variable length coded (VLCed) image signal received from the interlaced video encoding apparatus to the original image signal by performing variable length decoding, dequantization, IDCT, and motion compensation.

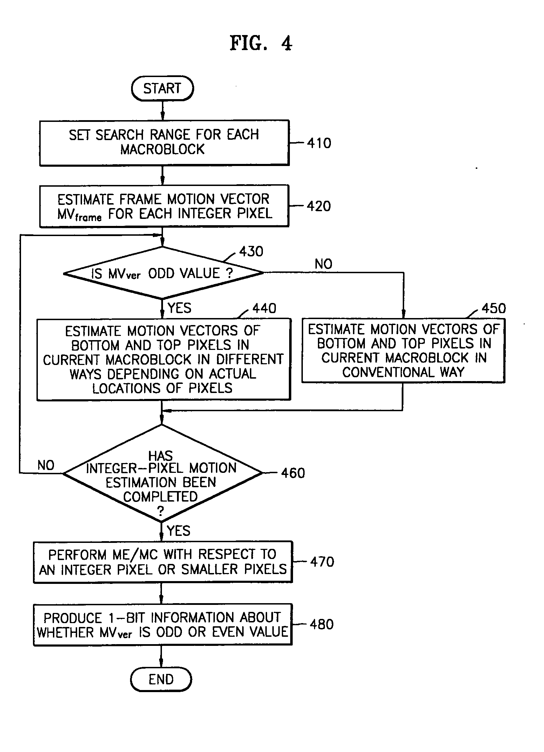

FIG. 4 is a detailed flowchart for illustrating frame ME/MC performed in the ME/MC unit 380 of FIG. 3. First, incoming image data is composed of macroblocks. In step 410, a search range is predetermined to perform motion estimation on the macroblocks.

Next, a frame motion vector MV_{frame} for each integer pixel is estimated, in step 420.

In step 430, it is determined whether the vertical component of a frame motion vector (hereinafter, referred to as MVᵥₑᵣ) is an odd or even value. If the MVᵥₑᵣ is an even value, conventional frame ME/MC occurs.

If the MVᵥₑᵣ is an odd value, motion vectors of pixels corresponding to the bottom and top fields in a current macroblock are calculated in different ways depending on the actual locations of the pixels, and the pixels in the current macroblock are matched with those in a reference frame according to the calculated motion vectors, in step 440. In other words, SADs between the top field pixels in the current macroblock and the bottom field pixels in the reference frame are calculated by using the original MVᵥₑᵣ without change. The bottom field pixels in the current macroblock are matched with top field pixels of the reference frame that are adjacent to the bottom field pixels, among the pixels with MVᵥₑᵣ properly scaled in consideration of the direction of an actual motion vector, obtaining SADs therebetween.

Thereafter, integer-pixel motion estimation is continuously performed on the next macroblock. In step 460, if there are no more macroblocks to be motion-estimated, it is considered that the integer-pixel motion estimation has been completed.

In step 470, the integer-pixel ME/MC is followed by ME/MC with respect to a half pixel (hereinafter, referred to as halfpel) or smaller pixels. For convenience, half-pixel motion estimation will be taken as an example hereinafter. In other words, if the MVᵥₑᵣ is an even value, all of the pixels in the next macroblock undergo general halfpel motion estimation. If the MVᵥₑᵣ is an odd value, the top field pixels in the next macroblock undergo halfpel ME/MC using bi-linear interpolation, and the bottom field pixels in the next macroblock are matched with pixels corresponding to the scaled MVᵥₑᵣ, and the matched pixels undergo halfpel ME/MC.

After the halfpel ME/MC has been completed, the integer-pixel MVᵥₑᵣ may not be distinguished whether it was an odd or even value. Accordingly, in step 480, when a frame MC mode has been selected for each macroblock, 1-bit information about whether the integer-pixel MVᵥₑᵣ is an odd or even value is produced. Thus, a decoder can decode image data with reference to the information about whether the MVᵥₑᵣ is an odd or even value.

Existing frame motion compensation, existing field motion compensation, and frame motion compensation according to the present invention can be adaptively used.

A decoder also can perform video motion estimation/compensation according to the present invention. In other words, the decoder performs motion estimation/compensation on a video in consideration of the actual locations of top field pixels and bottom field pixels, which are input according to information about whether the MVᵥₑᵣ is an odd or even value, which is received from an encoder.

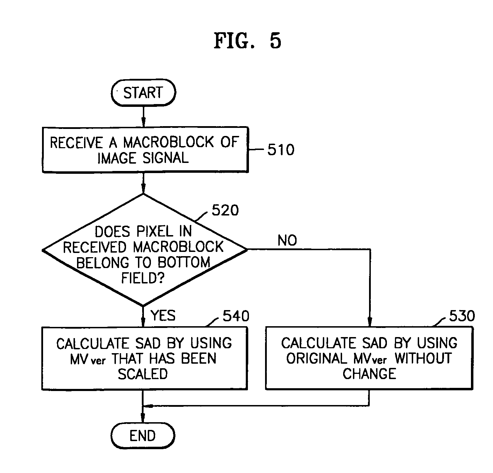

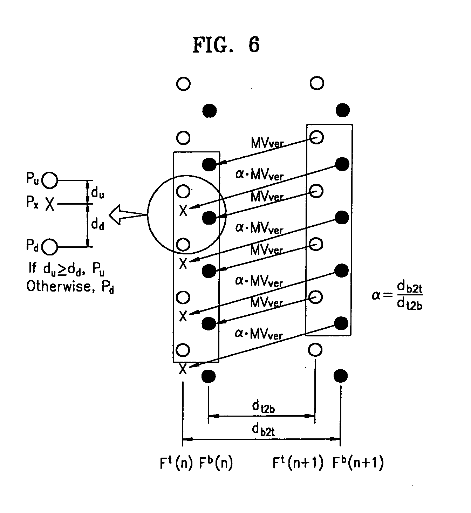

FIG. 5 is a detailed flowchart for illustrating frame ME that occurs when the MVᵥₑᵣ of FIG. 4 is an odd value. For convenience, referring to FIG. 6, an incoming image signal is in a time direction. A block to be motion-estimated, namely, a macroblock (MB), is composed of vertically arranged 8 pixels. F^{t}(n) and F^{b}(n) denote a top field and a bottom field, respectively, of an n-th frame. F^{t}(n+1) and F^{b}(n+1) denote a top field and a bottom field, respectively, of an (n+1)th frame. It is assumed that the (n+1)th frame is a current frame.

First, in step 510, pixels that form a macroblock are input.

In step 520, it is determined whether the pixels belong to either bottom or top fields.

In step 530, pixels corresponding to the top fields of the input macroblock are matched with pixels corresponding to the bottom fields of a reference frame, and an SAD between the former and latter pixels is obtained by using the original MVᵥₑᵣ without change.

In step 540, pixels corresponding to the bottom fields of the input macroblock are matched with pixels corresponding to the top fields of the reference frame, and an SAD between the former and latter pixels is obtained using the MVᵥₑᵣ that has been scaled. In other words, as shown in FIG. 6, the SAD between the pixels belonging to the bottom fields of the input macroblock and the pixels belonging to the top fields of the reference frame is obtained using a motion vector α*MV_{ver,} which is extended by α in consideration of the distances between matched fields. If the distance between F^{b}(n) and F^{t}(n+ 1) is d_{b2t}, and the distance between F^{t}(n) and F^{b}(n+1) is d_{t2b}, α is determined to be d_{b2t}/d_{t2b}. In FIG. 6, a location pointed by the motion vector α*MVᵥₑᵣ is represented by x.

The top field pixels in the input macroblock are matched with the bottom field pixels in the reference frame that correspond to the motion vector MVᵥₑᵣ.

The pixels at the locations x shown in FIG. 6 can be either integer pixels or non-integer pixels. Accordingly, each of the locations x pointed by the motion vector α*MVᵥₑᵣ is estimated using a top field pixel that is the closest to the location x. In other words, if the distance (dᵤ) between the pixel at the location x, Pₓ, and the integer pixel Pᵤ right above the pixel Pₓ is smaller than or equal to the distance (d_{d}) between the pixel Pₓ and the integer pixel P_{d} right below the pixel Pₓ, the integer pixel Pᵤ is selected as the pixel Pₓ. On the other hand, if the distance (dᵤ) is greater than the distance (d_{d}), the integer pixel P_{d} is selected as the top field pixel to be matched with the bottom field pixel in the reference frame. Alternatively, if the distance (dᵤ) is smaller than the distance (d_{d}), the integer pixel Pᵤ is selected as the top field pixel to be matched with the bottom field pixel in the reference frame. On the other hand, if the distance (dᵤ) is greater than or equal to the distance (d_{d}), the integer pixel P_{d} is selected as the pixel Pₓ.

Each of the locations x pointed by the motion vector α*MVᵥₑᵣ can also be estimated using a bottom field pixel that is the closest to the location x.

While the present invention has been particularly shown and described with reference to exemplary embodiments thereof, it will be understood by those of ordinary skill in the art that various changes in form and details may be made therein without departing from the spirit and scope of the present invention as defined by the following claims.

While the present invention has been particularly shown and described with reference to exemplary embodiments thereof, it will be understood by those of ordinary skill in the art that various changes in form and details may be made therein without departing from the spirit and scope of the present invention as defined by the following claims. The invention can also be embodied as computer readable codes on a computer readable recording medium. The computer readable recording medium is any data storage device that can store data, which can be thereafter read by a computer system. Examples of the computer readable recording medium include read-only memory (ROM), random-access memory (RAM), CD-ROMs, magnetic tapes, floppy disks, optical data storage devices, and so on. Also, the computer readable code can be transmitted via a carrier wave such as the Internet. The computer readable recording medium can also be distributed over a computer system network so that the computer readable code is stored and executed in a distributed fashion.

As described above, video motion estimation/compensation according to the present invention is performed in consideration of the actual locations of the top field pixels and bottom field pixels that are received in an interlaced scanning way. Thus, the performance of motion compensation is improved, and the amount of motion vector information is reduced.

## Claims

1. A video encoding/decoding method based on interlaced frame motion estimation and/or compensation, the method comprising:
(a) receiving a macroblock as a received macroblock and a search range and estimating a frame motion vector for each integer pixel;
(b) matching bottom field pixels in the received macroblock with top field pixels in a reference frame that correspond to locations indicated by a scaled frame motion vector whose vertical component has been scaled according to field-to-field distances, and matching top field pixels in the received macroblock with bottom field pixels in the reference frame that correspond to the frame motion vector, if the vertical component of the frame motion vector estimated in step (a) is an odd value; and
(c) matching the top or bottom field pixels in the received macroblock with the top or bottom field pixels in the reference frame that correspond to the frame motion vector, if the vertical component of the frame motion vector estimated in step (a) is an even value.

2. The video encoding/decoding method of claim 1, wherein in step (b), the bottom field pixels in the macroblock are matched with top field pixels in the reference frame that are adjacent to the locations indicated by the scaled frame motion vector, and motions between the bottom field pixels and the top field pixels are estimated and/or compensated for based on the frame motion vector for each integer pixel.

3. The video encoding/decoding method of claim 1 or 2, wherein in step (b), the bottom field pixels in the macroblock are matched with bottom field pixels in the reference frame that are adjacent to the locations indicated by the scaled frame motion vector, and motions between the bottom field pixels and the top field pixels are estimated and/or compensated for based on the frame motion vector for each integer pixel.

4. The video encoding/decoding method of one of claims 1 to 3, wherein in step (b), when each of the top field pixels at the locations indicated by the scaled frame motion vector is Pₓ, Pᵤ is a top field pixel right over the pixel Pₓ, P_{d} is a top field pixel right under the pixel Pₓ, and dᵤ and d_{d} are distances between Pₓ and Pᵤ and between Pₓ and P_{d}, respectively, if dᵤ is smaller than or equal to d_{d}, Pₓ is replaced by Pᵤ, and if dᵤ is greater than d_{d}, Pₓ is replaced by P_{d}.

5. The video encoding/decoding method of one of claims 1 to 4, wherein in step (b), when each of the top field pixels at the locations indicated by the scaled frame motion vector is Pₓ, Pᵤ is a top field pixel right over the pixel Pₓ, P_{d} is a top field pixel right under the pixel Pₓ, and dᵤ and d_{d} are distances between Pₓ and Pᵤ and between Pₓ and P_{d}, respectively, if du is smaller than d_{d}, Pₓ is replaced by Pᵤ, and if dᵤ is greater than or equal to d_{d}, Pₓ is replaced by P_{d}.

6. The video encoding/decoding method of one of claims 1 to 5, wherein if the vertical component of the frame motion vector is an odd value, it is scaled by d_{b2t}/d_{t2b}, wherein d_{b2t} denotes a distance between a bottom field of the n-th frame F^{b}(n) and a top field of the (n+1)th frame F^{t}(n+1) and d_{t2b} denotes a distance between a top field of the n-th frame F^{t}(n) and a bottom field of the (n+1)th frame F^{b}(n+1).

7. A method of encoding/decoding an interlaced video, the method comprising:
(a) setting a macroblock as a set macroblock and a search range for image data;
(b) determining whether a vertical component of a motion vector for each of integer pixels in the set macroblock is an even or odd value, and matching top and bottom field pixels in the set macroblock with field pixels in a reference frame that correspond to locations indicated by one of the motion vector and a scaled motion vector that is estimated depending on the locations of pixels; and
(c) if the motion vector for each of the integer pixels of the macroblock has been completely estimated in step (b), matching the top/bottom field pixels in the set macroblock with half pixels in the reference frame that correspond to the motion vector, wherein the matching is performed according to the vertical component of the motion vector.

8. The method of claim 7, wherein step (b) comprises:
matching the top or bottom field pixels in the macroblock with the top or bottom field pixels in the reference frame that correspond to the motion vector, if the vertical component of the motion vector for each of the integer pixels in the set macroblock is an even value; and
matching the bottom field pixels in the macroblock with the top field pixels in the reference frame that correspond to an extended motion vector of the motion vector that is extended depending on distances between fields to be matched, if the vertical component of the motion vector for each of the integer pixels in the set macroblock is an odd value.

9. The method of claim 7 or 8, wherein step (a) comprises:
performing general halfpel motion estimation/compensation if the vertical component of the motion vector for each of the integer pixels is an even value; and
performing halfpel motion estimation/compensation with bilinear interpolation with respect to the top field pixels and performing halfpel motion estimation/compensation with respect to the bottom field pixels using an extended motion vector of the motion vectors that is extended depending on distances between fields to be matched, if the vertical component of the motion vector for each of the integer pixels is an odd value.

10. The method of one of claims 7 to 9, further comprising producing information that represents whether the vertical component of the motion vector for each of the integer pixels estimated in step (c) is an odd or an even value.

11. An apparatus for encoding an interlaced video, the apparatus comprising:
a discrete cosine transform unit performing a discrete cosine transform operation on individual macroblocks of incoming image data and outputting discrete cosine transformed image data;
a quantization unit quantizing the discrete cosine transformed image data and outputting a quantized image data;
a dequantization unit dequantizing the quantized image data and outputting dequantized image data;
an inverse discrete cosine transform unit performing inverse discrete cosine transform operation on the dequantized image data and outputting inverse discrete cosine transformed image data;
a frame memory storing the inverse discrete cosine transformed image data on a frame-by-frame basis; and
a motion estimation/motion compensation unit determining whether a vertical component of a motion vector for each integer pixel in a macroblock is an even or an odd value when the incoming image data of a current frame is compared with image data of a previous frame stored in the frame memory, and if the vertical component of the motion vector is an odd value, matching bottom field pixels with top or bottom field pixels in the previous frame that correspond to a scaled motion vector of the motion vector that is scaled depending on distances between fields to be matched.

12. An apparatus for decoding an interlaced video, the apparatus comprising:
a dequantization unit dequantizing variable length coded image data and outputting dequantized image data;
an inverse discrete cosine transform unit performing inverse discrete cosine transform operation on the dequantized image data and outputting inverse discrete cosine transformed image data;
a frame memory storing the inverse discrete cosine transformed image data on a frame-by-frame basis; and
a motion estimation/motion compensation unit determining whether a vertical component of a motion vector for each integer pixel in a macroblock is an even or odd value when incoming image data of a current frame is compared with image data of a previous frame stored in the frame memory, and if the vertical component of the motion vector is an odd value, matching bottom field pixels with top or bottom field pixels in the previous frame that correspond to a scaled motion vector of the motion vector that is scaled depending on distances between fields to be matched.
